# EUROPEAN PATENT SPECIFICATION

(11) **EP 1 458 538 B1**
(45) Date of publication and mention of the grant of the patent: **28.09.2011**
(21) Application number: 02803855.2
(22) Date of filing: 08.10.2002
(51) Int. Cl.: B29C 43/00, D04H 1/00

(54) **PROCESS FOR FABRICATING POLYPROPYLENE SHEET**
VERFAHREN ZUR HERSTELLUNG VON POLYPROPYLENFOLIE
PROCEDE DE FABRICATION DE FEUILLE DE POLYPROPYLENE

(30) Priority: 27.11.2001 GB 0128405
(43) Date of publication of application: 22.09.2004
(73) Proprietor: Propex Operating Company, LLC, Chattanooga, TN 37421 (US)
(72) Inventor: Ward, Ian Macmillan, Bramhope Leeds LS16 9EL (GB); Hine, Peter John, Meanwood Leeds LS6 4AJ (GB)
(74) Representative: Betten & Resch
(86) International application number: PCT/GB2002/004572
(87) International publication number: WO 2003/045660

(56) References cited:
- WO-A-88/09406
- WO-A-98/15397
- GB-A- 2 253 420
- US-A- 3 962 205
- US-A- 3 997 386
- US-A- 4 642 153

## Description

The present invention relates to an improved process for making a monolithic article as defined in the preamble of appended claim 1.

In recent years, developments have been made in processes for compacting polyolefin fibres in order to make sheets of high stiffness and strength. Two-step compaction processes for melt-spun fibres employing high compaction pressures are well known. An example is disclosed in GB 2253420A, in which an assembly of fibres of an oriented polymer is hot compacted in a two-step process to form a sheet having good mechanical properties. The process involves an initial step in which the fibres are brought to and held at the compaction temperature whilst subject to a pressure sufficient to maintain the fibres in contact, and thereafter compacted at a high pressure (40-50 MPa) for a few seconds (the compaction pressure). In this process a proportion of the fibre surfaces, generally from 5 to 10 percent by weight, melt and subsequently recrystallise on cooling. This recrystallised phase binds the fibres together, resulting in good mechanical properties of the final sheet.

It is mentioned in GB 2253420A that the process can be applied to many types of oriented polymer including polyester and PEEK (polyether ether ketone) but that preferred polymers are oriented polyolefins. Polyethylene is the only polyolefin mentioned, and is used in all of the examples.

In WO 98/15397, an improvement to the above process is disclosed in which an assembly of melt-formed polyolefin fibres is maintained in intimate contact at elevated temperature sufficient to melt a proportion of the fibres, whilst being subjected to a compaction pressure of no greater than 10 MPa. This single-step, low-pressure process also produces products having excellent mechanical properties. If wished the fibres may have been subjected to a prior crosslinking process, preferably an irradiation crosslinking process comprising irradiating the fibres with an ionising radiation in an inert environment containing alkyne or diene compounds, and then an annealing step comprising annealing the irradiated polymer at an elevated temperature, in an inert environment containing alkyne or diene compounds.

In GB 2253420A it is stated that "the hot compacted materials are preferably cooled to ambient temperature under controlled conditions. Rapid cooling is less preferred. The most convenient technique is to allow the compacts to stand in the air until they have cooled to ambient temperature." The examples of GB 2253420A do not mention cooling rate.

In the examples of WO 98/15397 the compaction temperature and pressure were applied and the assembly was cooled under the compaction pressure to 100°C by passing a mixture of air and water through the heating platens. At this point the assembly was removed from the press and cooled to room temperature in air with no pressure applied. Cooling rate is not mentioned.

In Plastics, Rubber and Composites Processing and Applications, 1998, Vol 27, No. 4, pgs 167-171, specifically in relation to polyethylene it was stated that "the final cooling rate does not significantly affect the structure or properties of the final compacted sheet: quenched samples have been measured to have almost identical properties to slow cooled samples.."

We have discovered that unlike polyethylene, in the case of polypropylene the cooling rate may have a significant effect on the final properties of the compacted sheet. We have discovered that post-compaction annealing may also have a significant effect. Such measures have been shown to result in improvement of certain properties, including stiffness and yield stress, with maintenance of acceptable ductility and related properties. Surprisingly, this promising array of properties has been found to be achieved in certain polypropylene materials only.

Accordingly, the present invention provides a process for production of a monolithic article from a web of fibres of oriented polypropylene homopolymer or copolymer as defined in the characterizing part of appended claim 1. Preferred embodiments are defined in the subclaims.

The fibres can be made by any suitable process, for example solution or gel or melt forming, preferably by melt forming.

The term "fibres of oriented polypropylene homopolymer or copolymer" is used herein to mean all elongate elements which comprise polypropylene. They may be in the form of strands or filaments. They may be in the form of bands, ribbons or tapes, formed for example by initially slitting melt formed films. Whatever their form the fibres may be laid in a non-woven web for the process of the invention. Alternatively they may be formed into yarns comprising multiple fibres, or used in the form of a monofilament yarn. The fibres are usually formed into a fabric by weaving or knitting. Optionally the fibres may have been subjected to a crosslinking process, as described in WO 98/15397. Woven fabrics may comprise only fibres in the form of strands or filaments, or they may comprise a mixture of fibres in the form of strands or filaments and fibres in the form of tapes. Most preferred are fabrics which are woven from flat tapes, as these have the best mechanical properties.

"A retarded rate of cooling" in this specification means cooling under conditions such that heat is lost from the compacted web at a rate of not greater than 10°C/min.

The following paragraphs further define or describe the heat treatment variant, of subjecting the compacted web to a retarded rate of cooling down to a lower temperature at or below the temperature at which the recrystallisation of the matrix is complete.

The retarded cooling step preferably takes place immediately after compaction. More preferably, it takes place immediately after compaction without the compacted web having been removed from the compaction apparatus.

In this heat treatment the mean cooling rate from the compaction temperature down to said lower temperature is not greater than 10°C/min, preferably not greater than 5°C/min, more preferably not greater than 3°C/min. Whilst the preceding definitions are of mean cooling rate, preferably the cooling rate is retarded for the entire cooling regime, down to said lower temperature.

Preferably said lower temperature is below the temperature at which the recrystallisation of the matrix is complete. Suitably it is up to 5°C lower. Preferably it is up to 10°C lower.

Preferably said lower temperature is in the range 100-110°C. Most preferably the lower temperature is 100°C.

The following paragraphs further describe or define the heat treatment step, of annealing the compacted web at an elevated annealing temperature.

Preferably annealing takes place within 15°C of the temperature at which the matrix phase is completely melted, more preferably within 10°C of this temperature, still more preferably within 5°C of this temperature, and most preferably within 3°C of this temperature.

In principle it could be possible to anneal the compacted web at a temperature at or above the temperature at which the matrix phase is completely melted, because of the stabilisation provided by the oriented phase, which melts at a higher temperature. Preferably, however, the annealing temperature is below the temperature at which the matrix phase is completely melted.

Most preferred, therefore, is an annealing temperature which is within 3°C of the temperature at which the matrix phase is completely melted, but below that temperature. Such an annealing temperature has been found to give excellent results.

Preferably an annealing step is effected for at least 3 minutes, and most preferably for at least 5 minutes.

An annealing step may be effected immediately after compaction. Alternatively it is possible to temporally space the compaction step and annealing step, in accordance with the present invention. That is, a process in which compaction takes place and the compacted web is cooled by a regime not necessary in accordance with heat treatment step, but which is later heated for such a heat treatment step (ii) then to be carried out, is not excluded.

One embodiment of the present invention employs only a retarded cooling step. The retarded cooling is suitably carried out immediately after compaction, without the compacted web having been cooled first. Thus, the temperature of the compacted web is allowed to fall from the compaction temperature to the lower temperature.

One embodiment of the present invention employs only an annealing step.

In one embodiment of the present invention both a retarded cooling step and an annealing step are employed. For example an annealing step may be followed directly by a retarded cooling step, with the starting point of the retarded cooling step being the annealing temperature rather than a compaction temperature, and with the annealing temperature and said lower temperature providing the temperature end points across which the mean cooling rate may be determined. In another example compaction is followed by a retarded cooling step (i), followed by later reheating to effect an annealing step.

It is preferred that the hot compaction process of the invention uses a compaction pressure not exceeding 10 MPa. It is also preferred that a single pressure is used throughout the hot compaction process. Most preferred pressures are between 1 and 7 MPa, particularly between 2 and 5 MPa. It is preferred that the hot compaction pressure is maintained during cooling.

The minimum temperature at which the fibres should be contacted is preferably that at which the leading edge of the endotherm, measured by Differential Scanning Calorimetry (DSC), of the constrained polymer fibres extrapolated to zero intersects the temperature axis. Preferably, the temperature at which the fibres are compacted is no greater than the constrained peak temperature of melting at the ambient compaction pressure - i.e. the temperature at which the endotherm reaches it highest point. The proportion of the fibres which is melted during the hot compaction process is generally between 10 and 50 percent by weight.

Preferably the fibres used in the present invention have a weight average molecular weight (M_{w}) in the range 250,000 to 450,000, most preferably 330,000 to 400,000, as determined by the method hereinafter described. The polymer is preferably a polypropylene homopolymer, but may be a copolymer comprising polypropylene. Generally any copolymer containing polypropylene such as those disclosed in WO 98/15397 may be used.

Preferably the fibres have not been subjected to a prior crosslinking process, for example of the type described in WO 98/15397.

Compaction of the polypropylene may be carried out in an autoclave, or in a belt press or other apparatus in which the assembly is fed through a compaction zone where it is subjected to the required elevated temperature and pressure. Thus, the process may be operated as a continuous or semi-continuous process. Cooling is preferably effected whilst the compacted web is restrained against dimensional change, for example by being held under tension, which may be applied uniaxially or biaxially, or by being still under a compaction pressure. The restraint may assist the maintenance of good properties in the oriented phase.

The monolithic article may be regarded as a polypropylene composite made up of a polypropylene matrix phase which was produced during the process, and a polypropylene fibre phase, a proportion of which may show selective surface melting, arising from the process. The properties of each are of significance in achieving a monolithic article of the required properties, and they may be defined, and studied, separately.

Preferably the Young's modulus of the matrix phase is at least 0.9 GPa, more preferably at least 1.2 GPa, more preferably 1.5 GPa, and most preferably at least 1.7 GPa.

Preferably the failure strength of the matrix phase is at least 20 MPa, more preferably at least 25 MPa.

Preferably the failure strain of the matrix phase is at least 5%.

Preferably the Young's modulus in the longitudinal direction (which may alternatively be called the draw or axial direction) of the fibre phase is at least 4 GPa, more preferably at least 6 GPa.

Preferably the failure strength in the longitudinal direction of the fibre phase is at least 250 MPa, more preferably at least 350 MPa, and most preferably at least 400 MPa.

Preferably the failure strain in the longitudinal direction of the fibre phase is at least 5%, more preferably at least 8%, and most preferably at least 12%.

### EXAMPLE SET A

The effect of cooling rate was established by examining the cooling of a completely melted fabric, to simulate the melted matrix phase in a hot compacted sheet. It has been found that the properties of a hot compacted sheet are a combination of the properties of the original oriented fibres (the reinforcing phase), and the portion of the fibres which are melted (the matrix phase). Therefore by examining the properties of a melted fabric which has been cooled at different rates, it is possible to simulate the effect of cooling a hot compaction sheet at different rates.

The fabrics used were made from a number of different melt-formed polypropylene homopolymers detailed in Table 1 below. The reinforcement type indicates the type of fibre from which the fabric is woven.

**TABLE 1**

| Polymer No. | 1 | 2 | 3 | 4 |
|---|---|---|---|---|
| Reinforcement type | Multifilament bundles | Fibrillated tape | Flat tape | Flat tape |
| Young's modulus E(GPa) | 9.5 | 10.9 | 6.2 | 6.8 |
| Failure strength σ_{F} (MPa) | 453 | 350 | 370 | 422 |
| Failure strain ε_{F}(%) | 12 | 6 | 16 | 16 |
| Density ρ (kg/m³) | 907 | 912 | 932 | 910 |
| Mₙ | 38,500 | 55,800 | 56,100 | 78,100 |
| M_{w} | 191,000 | 290,000 | 325,000 | 360,000 |

M_{w} and Mₙ were measured by Rapra Technology Limited, of Shropshire, UK. Details of the testing are as follows:

| | |
|---|---|
| Instrument | Waters 150CV |
| Columns | Plgel 2 x mixed bed-B, 30cn 10 microns |
| Solvent | 1,2-dichlorobenzene with anti-oxidant |
| Flow-rate | 1.0 ml/min (nominal) |
| Temperature | 140°C (nominal) |
| Detector | refractive index and differential pressure |
| GPC system calibrated with polystyrene | |

Woven cloths made of each of the above polymers were completely melted by heating two layers of cloth in a hot press at 200°C. The pressure applied was 2.8 MPa, although since the samples were completely melted this was not critical. Cooling was achieved either by removing the sample and plunging it into water (quenching) or in the hot press by passing a coolant through the heated platens, after switching off the heating. Depending on the rate of cooling required 100% water, or air containing water droplets, was used as the coolant. In this example fast cooling in the press means a cooling rate of 20-30°C/min. The slow cooling rate, 1-2°C/min, was achieved by just switching off the heating and allowing the assembly to cool naturally in air.

### Mechanical properties

The stress/strain behaviour of the above cooled films was measured using an RDP Howden servo-mechanical tensile testing machine. The tensile tests on the compacted sheets and the melted films were carried out following ASTM D638 using a dumbbell shaped specimen. A normal strain rate of 10⁻³ s⁻¹ was used for all the tests. The sample strain during the tests was measured using a Messphysik video extensometer. Five samples were tested for each material at a temperature of 20 ± 2°C and a relative humidity of 35 ± 5%.

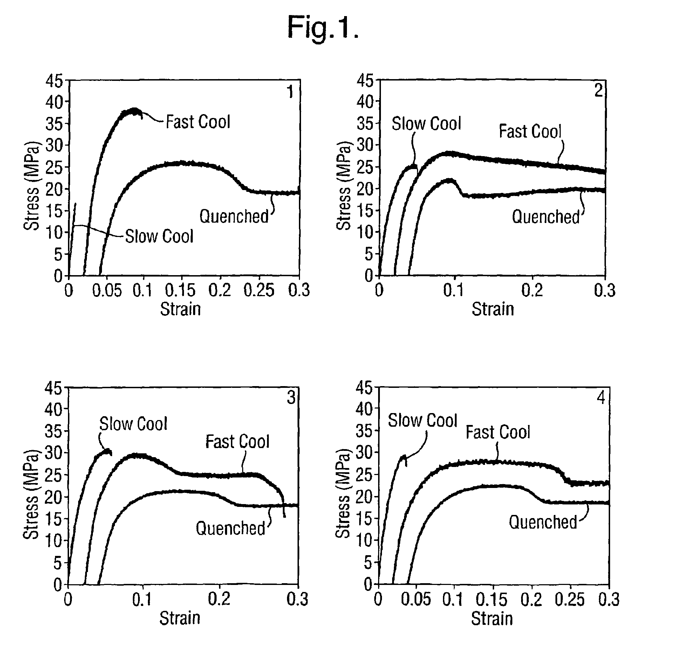

Typical stress-strain curves are shown in Figure 1, for each of the four polymer tests. The results show that for all four polymers, the quenched samples were ductile and drew in a stable manner with the formation of a stable neck region. Strain for these samples was measured from the crosshead speed, rather than directly on the sample, for if the neck formed outside the measured region, the strain in the measurement region actually decreased. However their Young's modulus and yield stress values were relatively low. The fast cooled and the quenched traces have been displaced a small way along the x-axis simply in order to display each trace clearly.

For the sample made using the fast cooling regime on-press, differences in behaviour were seen. The lowest molecular weight polymer (Polymer 1, Graph 1) showed an initial linear region, with an increased slope compared to the quenched sample, a yield point, again higher than the quenched sample, then rupture. This form of stress-strain behaviour is often termed necking-rupture. Two intermediate molecular weight samples (Polymers 2 and 3, Graphs 2 and 3) showed the formation of a neck but drawing did not stabilise and rupture occurred at ∼25% (0.25) strain. Only the highest molecular weight Polymer 4 (Graph 4) showed stable drawing following application of this cooling rate.

All the samples made by slow cooling showed necking-rupture or brittle behaviour. The failure strains of the original fibres were mostly between 10 and 20% (0.1 and 0.2): therefore if the matrix fails below this value then a hot compacted composite would see premature matrix failure before the reinforcing phase can reach full load carrying capacity, leading to premature delamination. It is seen that at the slowest cooling rate, none of the polymers reached this desired failure strain. In particular, the low molecular weight Polymer 1 showed brittle failure at a low stress. It may be seen that ductile-type behaviour became more pronounced as M_{w} increases; the highest failure strain was shown by Polymer 4. In most cases the initial slope of the slow-cooled samples was higher than either of the other two cooling rates, indicating that slow cooling gave highest Young's modulus. The failure stress for slow-cooled samples of Polymers 1 and 2 was less than for the fast cooled samples, but the failure stress for slow-cooled samples of Polymers 3 and 4 was approximately equal to the fast cooled samples.

### Density

The densities of the original oriented materials and the compacted sheets were measured using a density column. The column was made from a mixture of digycidyl ether and isopropanol to give a density range of ∼890 to ∼930 kg/m³. The results are shown in Table 2.

**TABLE 2**

| Polymer | Material and cooling regime | Density (kg/m³) |
|---|---|---|
| 1 | Original fibres | 907 |
| | Melted film - quenching | 911 |
| | Melted film - slow cooling | 915 |
| 2 | Original fibres - (cloth D) | 912 |
| | Melted film - quenching | 920 |
| | Melted film - slow cooling | 924 |
| 3 | Original tapes (cloth E) | 910 |
| | Melted film - quenching | 920 |
| | Melted film - slow cooling | 925 |

### Modulus

The Young's Modulus was determined in the initial linear region of the stress strain curve following the guidelines of ASTM D638. The results are shown in Table 3 below.

**TABLE 3**

| Polymer | Young's modulus E (GPa) | | |
|---|---|---|---|
| | Quenching | Fast cooling | Slow cooling |
| 1 | 1.04 ± 0. 2 | 1.85 ± 0.05 | 2.08 ± 0.13 |
| 2 | 1.00 ± 0.03 | 1.58 ± 0.06 | 1.71 ± 0.11 |
| 3 | 1.00 ± 0.09 | 1.24 ± 0.09 | 1.33 ± 0.01 |
| 4 | 0.95 ± 0.06 | 1.22 ± 0.10 | 1.37 ± 0.08 |

Tables 2 and 3 show the density and Young's modulus of the various melted films. Both of these properties can be used as a measure of the crystallinity of the films, as one can attribute increases in either parameter with an increase in crystallinity. As the cooling rate is increased, the density of Young's modulus for each polymer type decreases, suggesting the expected decrease in crystallinity (and associated improvement in ductility).

It is clear from the results in Example Set A that the cooling rate of the hot compaction process is a key process parameter, because it has a significant effect on the mechanical properties of the matrix phase, probably due to changes in crystallinity. The above results show that slow cooling may lead to good Young's modulus and failure strain properties, but compromised ductility; but that for polymers of higher M_{w} a useful level of ductility may be achieved, especially for uses in which stiffness and failure strain are of primary importance. In general, slow cooled samples appear to show higher stiffness values than fast cooled samples, but may be brittle if the polypropylene is of low molecular weight. However, samples may show reasonable ductility if the polypropylene is of higher molecular weight.

### EXAMPLE SET B

In these examples partially melted monolithic articles were prepared. Polymer 4 of Example Set A was used, with 4 layers of woven cloth in the compaction assembly. Compaction conditions of 5 minutes at 193°C and a compaction pressure of 4.8 GPa were employed. Slow cooling (20-30°C/min) or fast cooling (1-2°C/min) was effected as described in Example Set A.

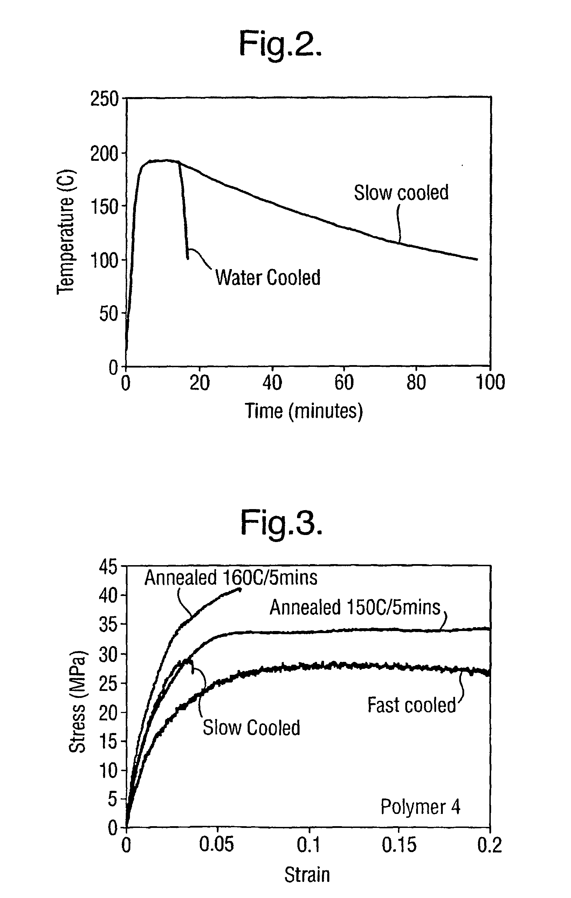

Figure 2 shows the temperature/time plots for the two samples. It will be seen that the fast cooled sample undergoes very rapid cooling to 150°C. The slow cooled sample takes about 25 minutes to drop from 193°C to 150°C, and about 80 minutes to drop from 193°C to 100°C.

### Melting points

The melting behaviour of the hot compacted sheets made using the two cooling rates were measured using Differential Scanning Calorimetry. Peak melting points of the matrix phase and oriented phase were thereby determined. Results are given in Table 4 below

**TABLE 4**

| Cooling | Peak melting point of matrix phase (°C) | Peak melting point of oriented phase (°C) |
|---|---|---|
| Fast cooled | 162 | 177 |
| Slow cooled | 168 | 179 |

It will be seen that with the slower cooled product the peak melting point of the matrix is substantially increased whilst that of the oriented phase is increased only a little. Given that the aim is to improve the microstructure of the matrix phase, preferably to be more highly crystalline and to have a larger average crystal size whilst not substantially affecting the oriented phase, this is a promising result.

### Stress-strain testing

Table 5 below shows average results from mechanical testing of the two samples.

**TABLE 5**

| Cooling | Modulus (GPa) | Strength (MPa) | Failure strain |
|---|---|---|---|
| Fast cooled | 3.0 ± 0.1 | 130 ± 10 | 13 ± 2 |
| Slow cooled | 3.3 ± 0.1 | 141 ± 6 | 11 ± 1 |

It will be seen that the mechanical properties of the slow cooled sample were good, in showing improved modulus and strength without significant loss of ductility.

### Peel Strength

Experiments were also made to assess the peel strength of the slow and fast cooled samples, and the averaged results are shown in Table 6 below.

**TABLE 6**

| Compaction | Cooling | Peel strength N/10mm |
|---|---|---|
| 4.2 MPa/193°C | Fast cooled | 7.5 ± 3.5 |
| | Slow cooled | 7.7 ± 1.9 |

The measured peel strengths were all quite high, with the slow cooled value holding up well in comparison to the fast cooled value.

### EXAMPLE SET C

### Peel Strength

Next, samples of a hot compacted composite material from Polymer 1 were made as described in Example Set B above, ie only partially melted, and subjected to peel strength testing. The averaged results are shown in Table 7 below.

**TABLE 7**

| Compaction | Cooling | Peel strength N/10mm |
|---|---|---|
| 4.2 MPa/193°C | Fast cooled | 3.0 ± 1.6 |
| | Slow cooled | 1.8 ± 0.6 |

Both values are low but slow cooling is shown to be disadvantageous, a finding not applicable to Polymer 4, having a much higher molecular weight.

### EXAMPLE SET D

Our results indicate that slow cooling can lead to high stiffness and high yield stress. However with polypropylene of low M_{w} the trade off of loss in ductility is severe; such materials are brittle after compaction and have a low failure strain. However with polypropylene of higher M_{w} ductility, and associated properties such as peel strength, may be acceptable. Thus, use of a higher M_{w} polypropylene with slow cooling after compaction offers the prospect of an article with an attractive blend of properties.

On the basis that a similar blend of properties might be achievable by holding the compacted article at an elevated temperature for a dwell time, annealing experiments were carried out.

The first annealing experiments were carried out on the fully melted Polymer 4, to make an article with, in effect, 100% matrix material, as this is the phase that is most likely to be affected, and any effects should be easy to interpret. The annealing regimes studied were 150°C for five minutes and 160°C for 5 minutes.

Differential scanning calorimetry (DSC) yielded the results in Table 8 below, indicating that annealing can substantially affect the crystallinity (indicated by the enthalpy) and the crystal size (indicated by the peak melting point), and that the higher temperature has a more pronounced effect.

**TABLE 8**

| | Enthalpy J/g /% | Peak melting point °c |
|---|---|---|
| As made | 63.4 / 31 | 164 |
| 150°C/5 minutes | 70.1 / 34 | 163 |
| 160°C/5 minutes | 85.3 / 41 | 169 |

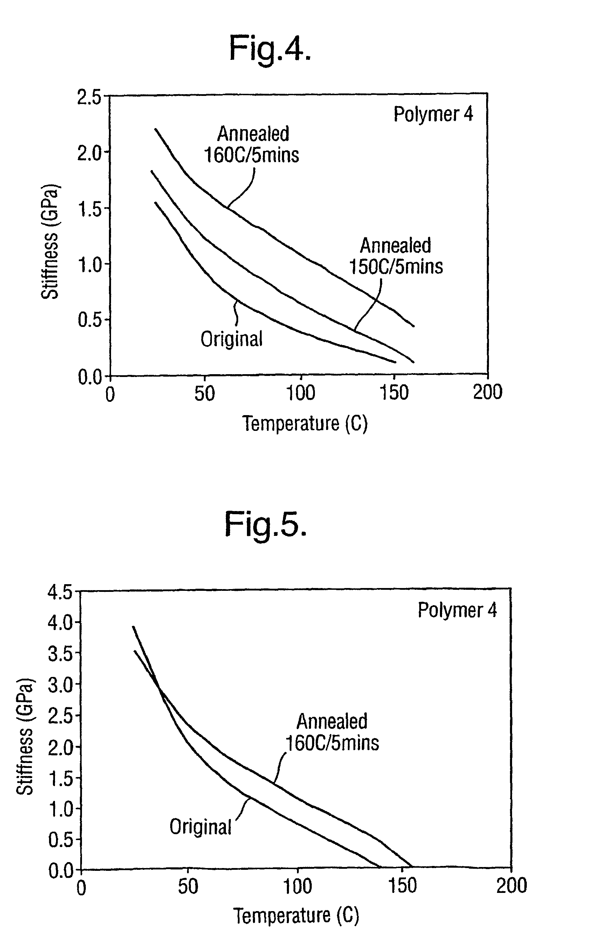

The articles were subjected to tensile testing at 20°C and at a range of elevated temperatures and the results are presented in Figs. 3 and 4.

From the traces in Fig. 3 it was determined that the modulus of each article was as follows:
Fast cooled (no annealing) 1.37 GPa
Slow cooled (no annealing) 1.85 GPa
Annealed, 160°C/5 mins 1.9 GPa
Annealed, 150°C/5 mins 2.2 GPa

The change in crystalline morphology is reflected in an increase in modulus, and also in yield stress, although the material annealed at 160°C still remained pseudo-ductile. Finally the DTMA temperature scan shown in Fig. 4 (scan from 20 to 160°C in 5°C increments, tested at frequency of 1 Hz using a dynamic strain of 0.05%) shows the 160°C annealed sample to have significantly better higher temperature performance. In Fig. 3 comparisons are shown with the slow cooled and fast cooled samples of Example Set A. In Fig. 4 a comparison is shown with an "original" article, this being one cooled at 20-30°C /min after compaction.

### EXAMPLESETE

In these tests, woven layers of Polymer 4 were used for the manufacture of partially melted hot compacted articles having an oriented fibre phase and a matrix phase. The conditions were 193°C for 5 minutes, at a compaction pressure of 4.2 MPa. Annealing was as described in Example Set D.

DTMA temperature scan testing as described in Example Set D was carried out. The results are shown in Fig. 5. The trace marked "original" refers to a sample cooled at 20-30°C/min after compaction.

The relevance of the Fig. 5 results is that stiffness as a function of the temperature at which the tests were carried out is an indication of expected creep or high temperature performance. It is likely to depend on the matrix phase, between the oriented phase. It will be seen that there is an improvement in the performance in the annealed sample at temperatures above 40°C, relative to the fast cooled sample.

### OVERALL CONCLUSIONS

Use of slow cooling and/or annealing, applied to compacted articles made in accordance with the present invention, comprising polypropylene of M_{w} at least 250,000, offers advantages in terms of high stiffness, high yield strength, high failure strength, good maintenance of stiffness at elevated temperatures and surprisingly good ductile-type properties such as peel strength and failure strain. The good balance of properties is surprising having regard to the brittleness and/or low yield strength of corresponding articles made using polypropylene of M_{w} less than 250,000.

## Claims

1. A process for production of a monolithic article from a web of fibres of oriented polypropylene homopolymer or copolymer having a weight average molecular weight of at least 250,000; the process comprising the steps of subjecting the web to elevated temperature and pressure sufficient to melt a proportion of the polymer and compact it, thereby yielding an oriented phase and a matrix phase, and effecting a heat treatment
**Characterised in that**
the heat treatment is subjecting the compacted web to a mean cooling rate of not greater than 10°C/min, down to a lower temperature at or below the temperature at which the recrystallisation of the matrix is complete.

2. A process as claimed in Claim 1 **characterised in that** the mean cooling rate from the compaction temperature down to said lower temperature is not greater than 5°C/minute.

3. A process as claimed in Claim 1 **characterised in that** for the heat treatment step the mean cooling rate from the compaction temperature down to said lower temperature is not greater than 3°C/minute.

4. A process as claimed in Claim 1 **characterised in that** said lower temperature is in the range 100-110°C.

5. A process as claimed in any preceding Claim **characterised in that** the heat treatment is carried out with the web restrained against dimensional change.

6. A process as claimed in Claim 5 **characterised in that** the heat treatment is effected with the compacted web under tension.

7. A process as claimed in Claim 5 **characterised in that** the heat treatment is effected with the compacted web retained in the compaction apparatus.

8. A process as claimed in any preceding claim **characterised in that** the compaction pressure does not exceed 10 MPa.

9. A process as claimed in any preceding claim **characterised in that** the weight average molecular weight of the fibres is in the range 250,000 to 400,000.

10. A process as claimed in Claim 9 **characterised in that** the weight average molecular weight of the fibres is in the range 300,000 to 400,000.

11. A process as claimed in any preceding claim **characterised in that** the fibres are melt formed fibres.

12. A process as claimed in Claim 1 wherein the compacted web is annealed at a temperature within 15°C of the temperature at which the matrix phase is completely melted and below that temperature.

13. A process as claimed Claim 12 **characterised in that** for the annealing step the compacted web is within the defined temperature range for at least 3 minutes

14. A process as claimed in Claim 12 **characterised in that** the annealing temperature is below the temperature at which the matrix phase is completely melted, and up to 10°C below that temperature.

15. A process as Claimed in Claim 12 **characterised in that** the annealing temperature is below the temperature at which the matrix phase is completely melted, and is up to 5°C below that temperature.

16. A process as Claimed in Claim 12 **characterised in that** the compacted web is within the defined temperature range for at least 5 minutes.

17. A process as claimed in any preceding claim wherein the process is carried out in an apparatus in which the assembly is fed through a compaction zone where it is subjected to the required elevated temperature and pressure.

18. A process as claimed in Claim 17 wherein the apparatus is a belt press.

## Patentansprüche

1. Verfahren zur Herstellung eines monolithischen Erzeugnisses aus einem Fasergewebe aus einem orientierten Polypropylen-Homopolymer oder -Kopolymer mit einem Gewichtsmittel des Molekulargewichts von wenigstens 250.000; das Verfahren umfasst die Schritte Aussetzen des Gewebes einer erhöhten Temperatur und einem erhöhten Druck, die genügen, einen Bereich des Polymers zu schmelzen und es zu kompaktieren, wodurch eine orientierte Phase und eine Matrixphase hervorgebracht werden, und Durchführung einer Wärmebehandlung,
**dadurch gekennzeichnet, dass**
die Wärmebehandlung das kompaktierte Gewebe einer mittleren Kühlrate von nicht größer als 10 °C/min herab zu einer niedrigeren Temperatur an oder unter die Temperatur, bei der die Rekristallisation der Matrix vollständig ist, aussetzt.

2. Verfahren nach Anspruch 1, **dadurch gekennzeichnet, dass** die mittlere Kühlrate von der Kompaktionstemperatur herab zu der niedrigeren Temperatur nicht größer als 5 °C/Minute ist.

3. Verfahren nach Anspruch 1, **dadurch gekennzeichnet, dass** für den Wärmebehandlungsschritt die mittlere Kühlrate von der Kompaktionstemperatur herab zu der niedrigeren Temperatur nicht größer als 3 °CIMinute ist.

4. Verfahren nach Anspruch 1, **dadurch gekennzeichnet, dass** die niedrigere Temperatur in dem Bereich von 100 - 110 °C ist.

5. Verfahren nach einem der vorhergehenden Ansprüche, **dadurch gekennzeichnet, dass** die Wärmebehandlung ausgeführt wird, wobei das Gewebe gegen dimensionale Änderung zurückgehaltenen wird.

6. Verfahren nach Anspruch 5, **dadurch gekennzeichnet, dass** die Wärmebehandlung durchgeführt wird, wobei das kompaktierte Gewebe unter Spannung ist.

7. Verfahren nach Anspruch 5, **dadurch gekennzeichnet, dass** die Wärmebehandlung durchgeführt wird, wobei das kompaktierte Gewebe in dem Kompaktionsgerät zurückgehalten ist.

8. Verfahren nach einem der vorhergehenden Ansprüche, **dadurch gekennzeichnet, dass** der Kompaktionsdruck 10 MPa nicht überschreitet.

9. Verfahren nach einem der vorhergehenden Ansprüche, **dadurch gekennzeichnet, dass** das Gewichtsmittel des Molekulargewichts der Fasern in dem Bereich von 250.000 bis 400.000 ist.

10. Verfahren nach Anspruch 9, **dadurch gekennzeichnet, dass** das Gewichtsmittel des Molekulargewichts der Fasern in dem Bereich von 300.000 bis 400,000 ist.

11. Verfahren nach einem der vorhergehenden Ansprüche, **dadurch gekennzeichnet, dass** die Fasern schmelzgeformte Fasern sind.

12. Verfahren nach Anspruch 1, wobei das kompaktierte Gewebe bei einer Temperatur innerhalb von 15 °C von der Temperatur, bei der die Phase vollständig geschmolzen ist, und unterhalb dieser Temperatur wärmenachbehandelt wird.

13. Verfahren nach Anspruch 12, **dadurch gekennzeichnet, dass** für den Wärmenachbehandlungsschritt das kompaktierte Gewebe innerhalb des definierten Temperaturbereichs für wenigstens drei Minuten ist.

14. Verfahren nach Anspruch 12, **dadurch gekennzeichnet, dass** die Wärmenachbehandlungstemperatur unterhalb der Temperatur, bei der die Matrixphase vollständig geschmolzen ist, und bis zu 10°C unterhalb dieser Temperatur ist.

15. Verfahren nach Anspruch 12, **dadurch gekennzeichnet, dass** die Wärmenachberiandlungstemperatur unterhalb der Temperatur, bei der die Matrixphase vollständig geschmolzen ist, und bis zu 5°C unterhalb dieser Temperatur ist.

16. Verfahren nach Anspruch 12, **dadurch gekennzeichnet, dass** das kompaktierte Gewebe innerhalb des definierten Temperaturbereichs für wenigstens fünf Minuten ist.

17. Verfahren nach einem der vorhergehenden Ansprüche, wobei das Verfahren in einem Gerät durchgeführt wird, in dem die Anordnung durch eine Kompaktionszone geführt wird, wo sie der benötigten erhöhten Temperatur und dem benötigten erhöhten Druck ausgesetzt ist.

18. Verfahren nach Anspruch 17, wobei das Gerät eine Bandpresse ist.

## Revendications

1. Procédé pour produire un article monolithique à partir d'une bande de fibres d'homopolymère ou copolymère de polypropylène orienté ayant un poids moléculaire moyen d'au moins 250 000 ; le procédé comprenant les étapes consistant à soumettre la bande à une température élevée et à une pression suffisante pour faire fondre une proportion du polymère et le compacter, donnant ainsi une phase orientée et une phase matricielle, et effectuer un traitement thermique,
**caractérisé en ce que** :
le traitement thermique soumet la bande compactée à une vitesse de refroidissement moyenne non supérieure à 10 °C/min jusqu'à une température inférieure à ou au-dessous de la température à laquelle la recristallisation de la matrice est achevée.

2. Procédé selon la revendication 1, **caractérisé en ce que** la vitesse de refroidissement moyenne à partir d'une température de compactage jusqu'à ladite température inférieure n'est pas supérieure à 5 °C/minute.

3. Procédé selon la revendication 1, **caractérisé en ce que** pour l'étape de traitement thermique, la vitesse de refroidissement moyenne à partir de la température de compactage jusqu'à ladite température inférieure n'est pas supérieure à 3 °C/minute.

4. Procédé selon la revendication 1, **caractérisé en ce que** ladite température inférieure est de l'ordre de 100-110 °C.

5. Procédé selon l'une quelconque des revendications précédentes, **caractérisé en ce que** le traitement thermique est réalisé avec la bande limitée contre le changement dimensionnel.

6. Procédé selon la revendication 5, **caractérisé en ce que** le traitement thermique est effectué avec la bande compactée sous tension.

7. Procédé selon la revendication 5, **caractérisé en ce que** le traitement thermique est effectué avec la bande compactée retenue dans l'appareil de compactage.

8. Procédé selon l'une quelconque des revendications précédentes, **caractérisé en ce que** la pression de compactage ne dépasse pas 10 MPa.

9. Procédé selon l'une quelconque des revendications précédentes, **caractérisé en ce que** le poids moléculaire moyen des fibres est de l'ordre 250 000 à 400 000.

10. Procédé selon la revendication 9, **caractérisé en ce que** le poids moléculaire moyen des fibres est de l'ordre 300 000 à 400 000.

11. Procédé selon l'une quelconque des revendications précédentes, **caractérisé en ce que** les fibres sont des fibres formées par fusion.

12. Procédé selon la revendication 1, dans lequel la bande compactée est recuite à une température dans les limites de 15°C de la température à laquelle la phase matricielle est complètement fondue et au-dessous de cette température.

13. Procédé selon la revendication 12, **caractérisé en ce que** pour l'étape de recuit, la bande compactée est dans les limites de la plage de températures définie, pendant au moins 3 minutes.

14. Procédé selon la revendication 12, **caractérisé en ce que** la température de recuit est au-dessous de la température à laquelle la phase matricielle est complètement fondue, et jusqu'à 10 °C au-dessous de cette température.

15. Procédé selon la revendication 12, **caractérisé en ce que** la température de recuit est au-dessous de la température à laquelle la phase matricielle est complètement fondue, et est jusqu'à 5 °C au-dessous de cette température.

16. Procédé selon la revendication 12, **caractérisé en ce que** la bande compactée est dans les limites de la plage de températures définie, pendant au moins 5 minutes.

17. Procédé selon l'une quelconque des revendications précédentes, dans lequel le procédé est réalisé dans un appareil dans lequel l'ensemble est alimenté par une zone de compactage où elle est soumise à la température élevée requise et à la pression requise.

18. Procédé selon la revendication 17, dans lequel l'appareil est une presse à courroie.
